# EUROPÄISCHE PATENTSCHRIFT

(11) **EP 0 478 895 B1**
(45) Veröffentlichungstag und Bekanntmachung des Hinweises auf die Patenterteilung: **30.03.1994**
(21) Anmeldenummer: 91109453.0
(22) Anmeldetag: 10.06.1991
(51) Int. Cl.: F02M 35/024, B01D 46/10

(54) **Ansaugluftfilter für Brennkraftmaschinen**
Intake air filter for combustion engines
Filtre à air d'aspiration pour moteurs à combustion

(30) Priorität: 01.10.1990 DE 4031014
(43) Veröffentlichungstag der Anmeldung: 08.04.1992
(73) Patentinhaber: FILTERWERK MANN & HUMMEL GMBH, D-71631 Ludwigsburg (DE)
(72) Erfinder: Ernst, Volker, W-7123 Sachsenheim 1 (DE); Hack, Herbert, W-7148 Remseck (DE); Scholz, Günther, W-7000 Stuttgart 50 (DE)
(74) Vertreter: Voth, Gerhard, Dipl.-Ing.

(56) Entgegenhaltungen:
- EP-A- 0 070 636
- EP-A- 0 391 019
- DE-A- 2 512 724

## Beschreibung

Die Erfindung betrifft ein Ansaugluftfilter für Brennkraftmaschinen. Es ist aus der EP-A-0 391 019 (Stand der Technik nach Artikel 54(3) EPÜ) ein Ansaugluftfilter für Brennkraftmaschinen bekannt. Dieses hat sich zwar in der Praxis bewährt, es besteht jedoch die Gefahr, daß bei einem Auswechseln des Filtereinsatzes der Ablauf der einzelnen Verfahrensschritte nicht immer korrekt eingehalten wird und es dadurch unter Umständen zu einem unsachgemäßen Einbau des Filtereinsatzes kommen kann.

Der Erfindung liegt deshalb die Aufgabe zugrunde, ein Ansaugluftfilter derart zu verbessern, daß ein problemloser Austausch jederzeit gewährleistet ist. Diese Aufgabe wird durch die Merkmale des Hauptanspruchs gelöst.

Ein wesentlicher Vorteil der Erfindung ist darin zu sehen, daß beim Herausziehen des Verschlußteils nunmehr der Rahmen in der ausgezogenen Endstellung an dem Verschlußteil einrastet. Damit ist der Rahmen zunächst in einer bestimmten Position am Verschlußteil fixiert. Der Filtereinsatz kann ausgetauscht werden. Beim Einführen des Rahmens und des Verschlußteils in das Filtergehäuse ist somit sichergestellt, daß der Rahmen - da er sich in seiner Endstellung befindet - zunächst in seine korrekte Lage innerhalb des Filtergehäuses gebracht wird und sodann unter Überwindung der Rastwirkung das Verschlußteil in das Filtergehäuse eingeschoben wird.

Erst bei diesem Einschieben des Verschlußteiles wird der Rahmen mit dem Filtereinsatz und der Dichtleiste an den Absatz des Filtergehäuses angepreßt.

In einer bevorzugten Ausführungsform der Rastvorrichtungen ist vorgesehen, Rastnocken an den Schieberkeilen anzuordnen, wobei diesen Rastnocken keine Vertiefungen am Rahmen gegenüberstehen, sondern die Kanten des Rahmens das Gegenstück bilden.

Es hat sich in der Praxis gezeigt, daß insbesondere an den aufeinander gleitenden Flächen zwischen Rahmen und Verschlußteil sich Staub ansammelt. Dieser führt dazu, daß die Gleitwirkung dieser Flächen gehemmt wird. Gemäß einer Weiterbildung der Erfindung ist vorgesehen, sämtliche Flächen, die aufeinander gleiten, mit Noppen oder linienförmigen Erhöhungen auszugestalten, so daß evtl. sich ansammelnder Staub sich zwischen diesen Erhöhungen ablagert und das Aufeinandergleiten der Flächen nicht oder nur unwesentlich beeinträchtigt.

Eine weitere vorteilhafte und gegenüber der Anordnung von punkt- oder linienförmigen Erhöhungen alternative Ausgestaltung der Erfindung sieht vor, die aufeinander gleitenden Flächen keilförmig auszubilden. Durch die keilförmige Ausgestaltung einer oder mehrerer Flächen wird dafür gesorgt, daß beim Herausnehmen des Verschlußteiles sich ein Abstand zwischen den Gleitflächen einstellt, so daß Staub und Schmutz abfallen kann und die Funktion der gegeneinander verschiebbaren Teile nicht beeinträchtigt.

Die Erfindung wird nachfolgend anhand eines Ausführungsbeispiels näher erläutert. Es zeigt:
- Figur 1: einen Schnitt durch ein Ansaugluftfilter mit in der Schließstellung abgedichtet angedrücktem Filtereinsatz,
- Figur 2: das in Figur 1 gezeigte Ansaugluftfilter in einer Draufsichtdarstellung,
- Figur 3: die Seitenansicht eines Rahmens für den Filtereinsatz.

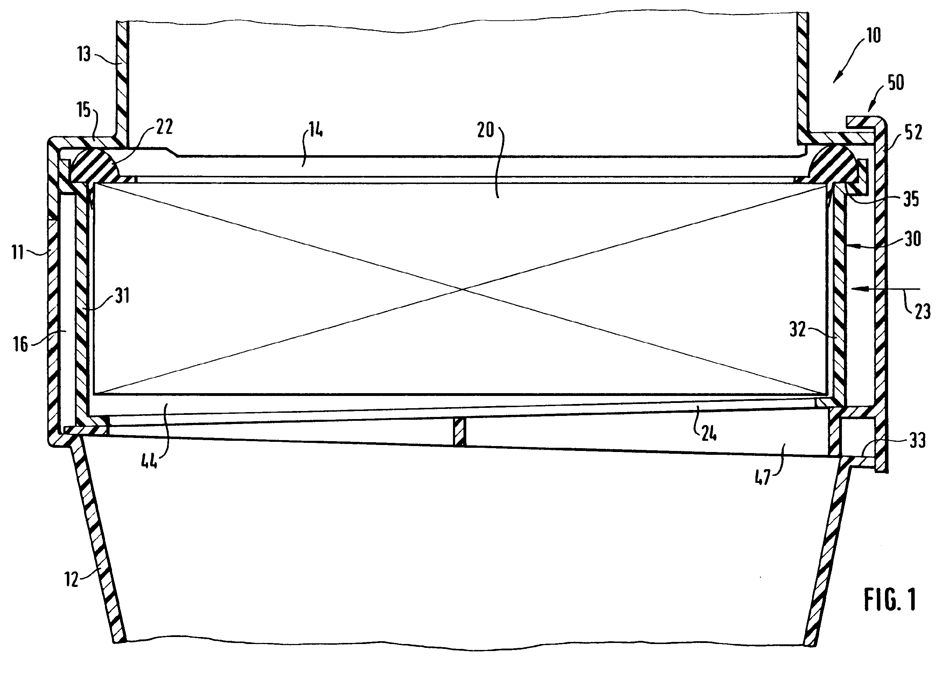

Das Ansaugluftfilter 10 gemäß Figur 1 hat ein Filtergehäuse 11 aus Kunststoff, in das von unten ein Rohr 12 zum Ansaugen der ungereinigten Luft einmündet und aus dem nach oben ein Reinluftrohr 13 ausmündet.

Ein rechteckiger Filtereinsatz, welcher in bekannter Weise mit einem gefalteten Filterpapier versehen ist, enthält am Umfang eine Dichtleiste 22. Der Filtereinsatz 20 trennt in dem Filtergehäuse 11 einen Reinluftraum 14 von einem Rohluftraum 44 ab. Der Filtereinsatz 20 ist auswechselbar in einen Stirnseitig im wesentlichen offenen Rahmen 30 eingesetzt, der gleichfalls aus Kunststoff besteht. Seine Seitenteile 31, 32 weisen einen in gleicher Höhe angeordneten Absatz 35 auf. An diesem ist die Dichtleiste 22 des Filtereinsatzes 20 angelegt.

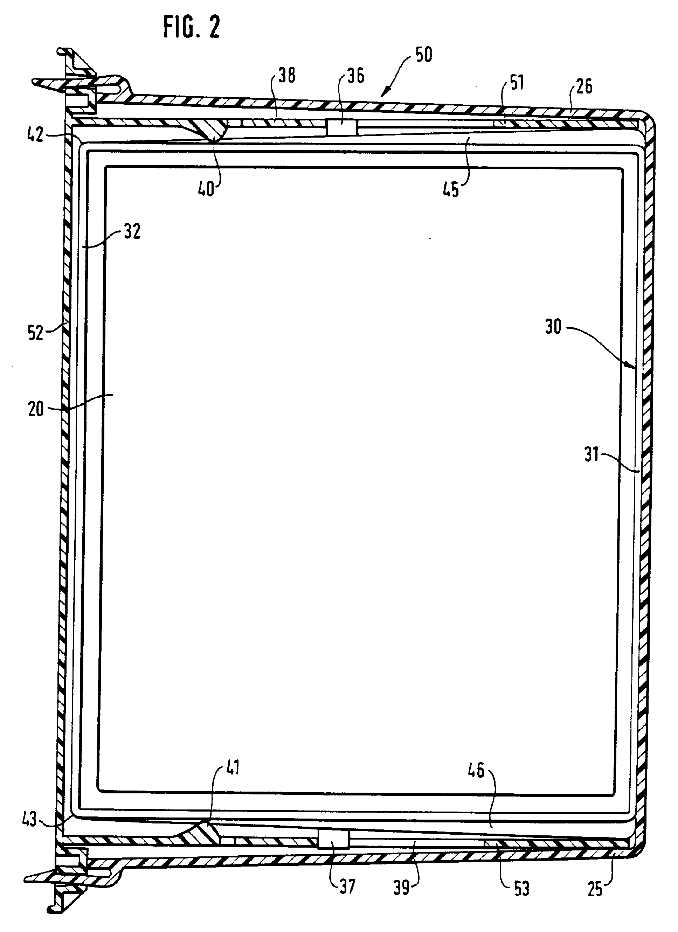

Der Rahmen 30 ist innerhalb eines Verschlußteiles 50 geführt. Dieses Verschlußteil besteht aus einem Deckel 52, an dem, wie in Figur 2 gezeigt, zwei als Schieberkeil 51, 53 ausgebildete Seitenflächen angeordnet sind. Dieses Verschlußteil 50 wird mit dem Rahmen 30 in das Filtergehäuse 11 gemäß der Einschubrichtung des Pfeiles 23 hineingeschoben. Durch die Gestaltung der Schieberkeile 51, 53 wird bei dem Einschieben des Verschlußteils 50 der Rahmen 30 mit dem darin befindlichen Filtereinsatz 20 in Richtung des Reinluftraums bewegt und damit eine Abdichtung des Reinluftraums über den Absatz 15 und die Dichtleiste 22 bewirkt.

Beim Lösen des Filtereinsatzes aus dem Filtergehäuse wird zunächst das Verschlußteil 50 entgegen der Pfeilrichtung 23 bewegt. Dies führt dazu, daß die Verschlußkraft, welche den Filtereinsatz 20 an den Absatz 15 angepreßt hat, aufgehoben wird. Der Filtereinsatz 20 mit dem Rahmen 30 verharrt zunächst noch in seiner Einbaulage. Sobald jedoch die beiden Vorsprünge 36, 37 an dem Anschlag des Langlochs 38, 39 angelangt sind, wird auch der Rahmen durch das Verschlußteil 50 mitgenommen. Gleichzeitig rasten die Rastnocken 40, 41 an den vorderen Kanten 42, 43 ein und fixieren damit den Rahmen 30 in dieser ausgeschobenen Position. Nachdem ein neuer Filtereinsat 20 in den Rahmen 30 eingelegt worden ist, kann dieser wieder in das Filtergehäuse 11 eingeschoben werden. Durch die Rastnocken 40, 41 wird gewährleistet, daß das Verschlußteil 50 erst dann ein Verschließen und Abdichten des Rahmens bewirken kann, wenn dieser Rahmen sich vollständig in dem Gehäuse befindet und an dem Gehäuseende angelegt ist. Erst wenn diese Bedingung erfüllt ist, wird mit einer erhöhten Einschubkraft die Haltekraft der Rastnocken überwunden und das Verschlußteil 50 vollständig in das Filtergehäuse 11 eingeschoben.

Wie in Figur 2 dargestellt, sind sowohl die beiden Seitenwände 25, 26 des Filtergehäuses 11 als auch die Seitenwände 45, 46 des Rahmens 30 keilförmig ausgestaltet. Dies bewirkt beim Herausnehmen des Verschlußteils 50, daß die benachbarten Flächen nicht aufeinander gleiten und damit, insbesondere wenn diese Flächen durch Staub oder Schmutz verunreinigt sind, keine hohe Lösekraft erfordern.

In gleicher Weise ist auch, wie in Figur 1 dargestellt, der Boden 24 des Rahmens 30 sowie der Boden 33 des Filtergehäuses 11 keilförmig gestaltet, so daß auch diese mit dem Schiebekeil 47 in Verbindung stehenden Flächen keine erhöhte Lösekraft erfordern.

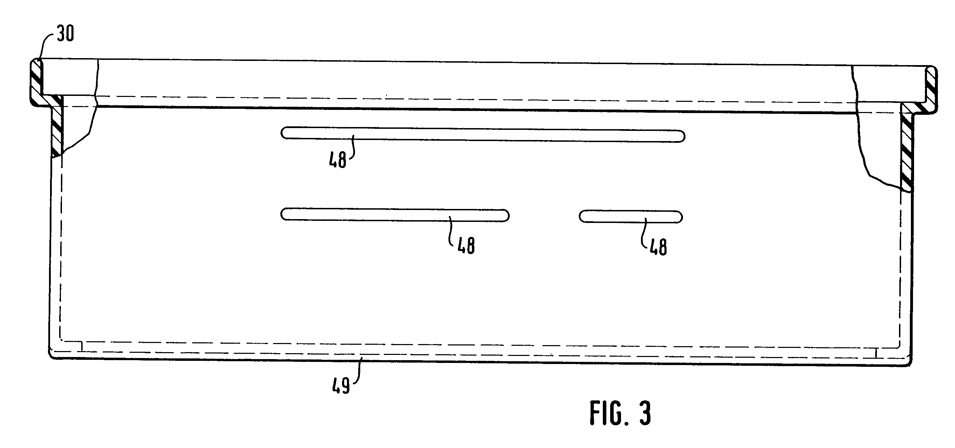

Gemäß Figur 3, welche den Rahmen 30 in einer Seitenansicht zeigt, kann anstelle der keilförmigen Anordnung der Seitenflächen auch vorgesehen sein, die Seitenflächen dieses Rahmens mit wulstförmigen Erhöhungen 48 zu versehen. In gleicher Weise können auch an dem Boden des Rahmens 30 solche Erhöhungen 49 angebracht sein.

Durch die Anordnung dieser Elemente werden großflächige Kontaktflächen zwischen dem Rahmen 30 und dem Verschlußteil 50 vermieden. Auch diese Ausgestaltung verringert damit die Lösekräfte, die zum Austausch des Filtereinsatzes erforderlich sind.

### Bezugszeichenliste

- 10: Ansaugluftfilter
- 11: Filtergehäuse
- 12: Rohr
- 13: Reinluftrohr
- 14: Reinluftraum
- 15: Absatz
- 16: Öffnung
- 17: Schmalseite
- 18: Seitenteil

- 20: Filtereinsatz
- 22: Dichtleiste
- 23: Einschubrichtung
- 24: Boden
- 25: Seitenwand
- 26: Seitenwand

- 30: Rahmen
- 31: Seitenteil
- 32: Seitenteil
- 35: Absatz
- 36: Vorsprung
- 37: Vorsprung
- 38: Langloch
- 39: Langloch

- 40: Rastnocken
- 41: Rastnocken
- 42: Kante
- 43: Kante
- 44: Rohluftraum
- 45: Seitenwand
- 46: Seitenwand
- 47: Schieberkeil
- 48: Erhöhung
- 49: Erhöhung

- 50: Verschlußteil
- 51: Schieberkeil
- 52: Deckel
- 53: Schieberkeil

## Patentansprüche

1. Ansaugluftfilter für Brennkraftmaschinen mit einem flachen, auswechselbaren, im Betrieb quer durchströmten Filtereinsatz (20), der eine am Umfang angeordnete Dichtleiste (22) zur stirnseitigen Abdichtung an einem Absatz (15) des Filtergehäuses (11) aufweist und über eine Schmalseite in das Filtergehäuse einschiebbar ist, wobei die Dichtungspressung über geneigte Absätze an den Seitenteilen des Filtergehäuses erfolgt, wobei ein stirnseitig im wesentlichen offener Rahmen (30) den Filtereinsatz (20) auswechselbar aufnimmt und ein in der Einschubrichtung (23) des Filtereinsatzes (20) zu einer arretierbaren Schließstellung verschiebbares Verschlußteil (50) aufweist, das für das Aufbringen der Dichtungspressung mit Widerlagern zum Abstützen einerseits an den geneigten Absätzen der Seitenteile 32 des Filtergehäuses (11) und andererseits am Rahmen (30) versehen ist, wobei das Verschlußteil (50) zwei den Rahmen (30) seitlich umfassende Schieberkeile (51, 53) aufweist, die durch einen Deckel (52) fest miteinander verbunden sind, wobei an den Schieberkeilen (51, 53) und an dem Rahmen (30) Rastvorrichtungen vorgesehen sind, welche ein Einrasten des Rahmens in seiner ausgeschobenen Endstellung bezüglich der Einschubrichtung bewirken.

2. Ansaugluftfilter nach Anspruch 1, dadurch gekennzeichnet, daß an den Schieberkeilen (51, 53) sich zum Rahmen (30) hin erstreckende Rastnocken (40, 41) vorgesehen sind und der Rahmen (30) mit seinen dem Deckel (52) zugewandten Kanten (42, 43) an den Rastnocken einrastet.

3. Ansaugluftfilter nach einem der vorhergehenden Ansprüche, dadurch gekennzeichnet, daß wenigstens eine der aufeinander gleitenden FLächen von Rahmen (30) und Verschlußteil (50) mit punkt- oder längs der Gleitrichtung verlaufenden linienförmigen Erhöhungen (48, 49) versehen sind.

4. Ansaugluftfilter nach Anspruch 1 oder 2, dadurch gekennzeichnet, daß die den Schieberkeilen (51) benachbarten Seitenflächen des Rahmens (30) keilförmig derart verlaufen, daß bei einem Lösen und Herausbewegen des Verschlußteils (50) der Abstand desselben zu den Seitenflächen des Rahmens (30) sich vergrößert.

5. Ansaugluftfilter nach Anspruch 1, 2 oder 4, dadurch gekennzeichnet, daß die den Schieberkeilen benachbarten Seitenteile (25, 26) des Filtergehäuses (11) keilförmig derart verlaufen, daß bei einem Lösen und Herausbewegen des Verschlußteils (50) der Abstand desselben zu den Seitenteilen (25, 26) sich vergrößert.

6. Ansaugluftfilter nach einem der vorhergehenden Ansprüche, dadurch gekennzeichnet, daß die Dichtleiste (22) des Filtereinsatzes eine mittlere Shore-Härte von 8 - 16 aufweist.

## Claims

1. Air inlet filter for internal combustion engines, including a flat, interchangeable filter insert (20), which is transversed traversely during operation and has a sealing strip (22) disposed on the periphery for sealing with the end face of a shoulder portion (15) of the filter housing (11), and said filter insert is slidable into the filter housing via a narrow side, the sealing pressure being exerted via inclined shoulder portions on the lateral portions of the filter housing, a frame (30) which is substantially open at the end face interchangeably accommodating the filter insert (20) and having a closure member (50), which is displaceable in the slide-in direction (23) of the filter insert (20) to an arrestable closed position, said closure member, for application of the sealing pressure, being provided with abutments for support, on the one hand, on the inclined shoulder portions of the lateral portions (32) of the filter housing (11) and, on the other hand, on the frame (30), the closure member (50) having two wedge-shaped sliders (51, 53), which laterally flank the frame (30) and are securedly interconnected by means of a cover (52), locking means being provided on the wedge-shaped sliders (51, 53) and on the frame (30) and causing the frame to lock in its pushed-out end position relative to the slide-in direction.

2. Air inlet filter according to claim 1, characterised in that locking cams (40, 41), which extend towards the frame (30), are provided on the wedge-shaped sliders (51, 53), and the frame (30) locks in position on the locking cams with its edges (42, 43) facing the cover (52).

3. Air inlet filter according to one of the preceding claims, characterised in that at least one of the faces of frame (30) and closure member (50), which slide on each other, are provided with raised portions (48, 49), which are dot-like or linear-shaped extending longitudinally of the sliding direction.

4. Air inlet filter according to claim 1 or 2, characterised in that the lateral faces of the frame (30) adjacent the wedge-shaped sliders (51) extend in such a wedge-shaped manner that, if the closure member (50) is released and moved outwardly, the spacing between said closure member and the lateral faces of the frame (30) increases.

5. Air inlet filter according to claim 1, 2 or 4, characterised in that the lateral portions (25, 26) of the filter housing (11) adjacent the wedge-shaped sliders extend in such a wedge-shaped manner that, if the closure member (50) is released and moved outwardly, the spacing between said closure member and the lateral portions (25, 26) increases.

6. Air inlet filter according to one of the preceding claims, characterised in that the sealing strip (22) of the filter insert has a mean Shore hardness of 8 - 16.

## Revendications

1. Filtre à air d'aspiration pour moteurs à combustion interne, dans lequel :
- un élément filtrant plat (20) interchangeable parcouru en marche par l'air transversalement, porte à sa périphérie une bande (22) assurant l'étanchéité par appui frontal contre un décrochement (15) du boîtier du filtre et peut être introduit dans le boîtier par un côté étroit, la pression assurant l'étanchéité étant produite par des décrochements inclinés des parois latérales du boîtier,
- un châssis à ouverture frontale (30) reçoit l'élément filtrant (20) interchangeable et est équipé d'une pièce de fermeture (50) pouvant coulisser, dans le sens d'engagement (23) de l'élément filtrant, jusqu'à atteindre une position de fermeture équipée d'un organe de maintien,
- pour l'application de la pression d'étanchéité, il est prévu des portées venant en appui d'une part le long des décrochements en pente des parois latérales 32 du boîtier (11) et d'autre part sur le châssis (30),
- la pièce de fermeture (50) est équipée de deux coins de coulissement (51, 53) encadrant latéralement le châssis (30) et reliés par un couvercle (52),
- il est prévu, sur les coins (51, 53) et sur le châssis (30) des organes d'arrêt retenant le châssis dans sa position extrême de sortie, par rapport au sens d'engagement.

2. Filtre à air selon la revendication 1, caractérisé en ce que les coins de coulissement (51, 53) sont équipés de dents d'arrêt (40, 41) en saillie par rapport au châssis (30) et le châssis (30) s'enclenche sur les dents d'arrêt au niveau de ses angles (42, 43) en regard du couvercle (52).

3. Filtre à air selon l'une des revendications précédentes, caractérisé en ce qu'au moins une des surfaces en glissement l'une sur l'autre, du châssis (30) et de la pièce de fermeture (50), est équipée de bossages (48, 49) constituant une ligne droite s'étendant par points ou le long de la direction de glissement.

4. Filtre à air selon la revendication 1 ou 2, caractérisé en ce que les faces latérales du châssis (30), proches des coins de coulissement (51) se développent en forme de coins de sorte que la distance séparant la pièce de fermeture (50) de ces faces latérales augmente lorsqu'on la retire.

5. Filtre à air selon la revendication 1, 2 ou 4, caractérisé en ce que les faces latérales (25, 26) du boîtier de filtre (11) se développent en forme de coin de sorte que la distance séparant la pièce de fermeture (50) de ces faces latérales (25, 26) augmente lorsqu'on la retire.

6. Filtre à air selon l'une des revendications précédentes, caractérisé en ce que la bande d'étanchéité (22) de l'élément filtrant présente une dureté shore comprise entre 8 et 16.
